# EUROPÄISCHE PATENTSCHRIFT

(11) **EP 3 146 239 B1**
(45) Veröffentlichungstag und Bekanntmachung des Hinweises auf die Patenterteilung: **25.07.2018**
(21) Anmeldenummer: 15723969.0
(22) Anmeldetag: 22.05.2015
(51) Int. Cl.: F16H 57/04

(54) **STIRNRADGETRIEBE**
SPUR GEAR TRANSMISSION
ENGRENAGE DROIT

(30) Priorität: 23.05.2014 DE 102014209922
(43) Veröffentlichungstag der Anmeldung: 29.03.2017
(60) Teilanmeldung: 18177468.8
(73) Patentinhaber: Voith Patent GmbH, 89522 Heidenheim (DE)
(72) Erfinder: KÄMMERER, Steffen, 87509 Immenstadt-Eckarts (DE); ZEMELLA, Philipp, 38678 Clausthal-Zellerfeld (DE)
(86) Internationale Anmeldenummer: PCT/EP2015/061359
(87) Internationale Veröffentlichungsnummer: WO 2015/177332

(56) Entgegenhaltungen:
- WO-A1-2012/028231
- GB-A- 681 298
- US-A- 3 489 034
- US-A- 3 601 515
- US-A- 5 048 370
- US-A1- 2013 025 405

## Beschreibung

Die vorliegende Erfindung betrifft ein Stirnradgetriebe mit wenigstens zwei verzahnten Stirnrädern, im Einzelnen gemäß dem Oberbergriff der unabhängigen Ansprüche.

Stirnradgetriebe sind beispielsweise aus der WO 2012/028231 A1 bekannt. Solche Stirnradgetriebe sind beispielsweise als hochtourige Getriebe, wie Turbogetriebe, ausgeführt.
Besonders bei solchen hochtourigen Getrieben wie Turbogetrieben entstehen aufgrund der Verwirbelung des Luft-Öl-Gemischs im Innenraum des Getriebegehäuses Verluste, die unerwünscht sind. Zur Verlustreduzierung sind verschiedene Maßnahmen bekannt. Eine Maßnahme sieht vor, den Innenraum des Getriebegehäuses mittels einer Vakuumpumpe zu besaugen, sodass der Druck im Innenraum niedriger als jener der Umgebung außerhalb des Getriebegehäuses ist.
Eine andere Maßnahme, die eine solche Besaugung des Getriebegehäuses vermeiden soll, ist in der eingangs genannten WO 2012/028231 A1 dargestellt, nämlich das Vorsehen einer eng anliegenden Hüllwand um die Stirnräder, welche die Stirnräder in Umfangsrichtung bis auf einen Einlassspalt und gegebenenfalls Auslassspalt, der außerhalb des äußeren Umfangs der Stirnräder positioniert ist, umschließt. Auch diese Kapselung der Stirnräder mit der Hüllwand wurde vorgesehen, um einen Unterdruck im Bereich des äußeren Durchmessers der Stirnräder beziehungsweise im Bereich von deren Verzahnungen zu erzeugen, der die Verluste reduziert.
Beide bekannten Maßnahmen basieren somit auf der Annahme, dass ein möglichst geringer Druck, das heißt ein möglichst starkes Vakuum im Bereich der umlaufenden Verzahnungen der Stirnräder erzeugt werden muss, um die Verlustleistungen zu reduzieren. Daher wurden entsprechend aufwändige Maßnahmen zur weitgehenden Abdichtung beziehungsweise vergleichsweise leistungsstarke und damit teure und energieintensive Vakuumpumpen vorgesehen, um das Vakuum möglichst zu optimieren. Diese Maßnahmen sind mit unerwünschten Kosten verbunden.

DE 198 60 353 C1 offenbart ein Stirnradgetriebe, bei welchem die Stirnräder von einem zusätzlichen Innengehäuse, das innerhalb eines Hauptgehäuses befestigt ist, umschlossen werden. Im Innenraum des Innengehäuses wird mittels einer Pumpe ein Teilvakuum erzeugt. Der Raum zwischen dem Innengehäuse und dem Hauptgehäuse steht unter Atmosphärendruck. Die Stirnräder ragen nicht nach außen aus dem Innengehäuse heraus, sondern werden mit Abstand von diesem umschlossen, sodass sich auch keine ineinander übergehende Ringspalte ergeben.

DE 10 2006 022 964 A1 beschreibt einen Fluidausgleichsbehälter und ein damit ausgestattetes Getriebe. Der Fluidausgleichsbehälter umschließt die Stirnräder seitlich über einen Teil ihres Umfangs.

DE 10 2007 041 318 A1 beschreibt ein Schaltgetriebe mit einer Zahnradpumpe, wobei die Zahnradpumpe eine Außenzahnradpumpe ist und zwei miteinander kämmende Zahnräder aufweist, von denen eines einem der Radsätze im Getriebe angehört. Zur Ausbildung eines Pumpspalts ist unterhalb der Zahnräder ein zusätzliches Gehäuse vorgesehen, das sich teilweise über den Umfang der Zahnräder erstreckt.

GB 292 540 A beschreibt mit hoher Drehzahl umlaufende Zahnräder in einem Gehäuse, denen eine besondere Führung zugeordnet ist, um die Schmierung der Zahnräder zu verbessern. Die Führung umschließt die Zahnräder teilweise und ist auf der Unterseite zumindest derart geschlossen, dass die Zahnräder nicht aus der Führung herausragen.

GB 1 426 352 A beschreibt eine Schmiereinrichtung für Zahnräder, bei welchem ebenfalls ein teilweise geöffnetes Innengehäuse vorgesehen ist, das die Zahnräder auf deren Unterseite und auf einer seitlichen Seite eng umschließt.

GB 458 379 A offenbart eine Luftpumpe, die in ein Getriebe integriert ist. Die Luftpumpe weist Führungsbögen auf, die die Zahnräder auf deren Stirnseiten einschließen.

US 2014/0054114 A1 offenbart eine Schmierölversorgung für ein Getriebe, bei welcher eine Abdeckung das Ritzel zweier Stirnräder vollständig umschließt und das andere Zahnrad der beiden Stirnräder über dem halben Umfang umschließt. Demgegenüber offenbart US 3,601,515 eine Zahnradpumpe, bei welchem eine seitliche Abdeckung vorgesehen ist, die das im Ölsumpf laufende Zahnrad in Drehrichtung betrachtet über den aus dem Ölsumpf herausragenden Teilbereich des Außenumfanges bis um Eingriffsbereich mit dem anderen Zahnrad, den Eingriffsbereich und einen Teilbereich des anderen Zahnrades in Umfangsrichtung umschließt.

US 5 950 501 A zeigt ein Stirnradgetriebe, dessen Innengehäuse die Stirnräder mit einem gewissen Abstand umschließt und mittels einer Pumpe evakuiert oder mit einem Gas befüllt wird. Es sind keine ineinander übergehende Ringspalte vorgesehen und die Stirnräder ragen nicht aus dem Innengehäuse heraus.

US 2 645 305 A beschreibt eine Schmiereinrichtung für Stirnräder eines Getriebes mit einer seitlichen Abschirmung der Stirnräder, die nur über einen kleinen Teil des äußeren Umfangs der Stirnräder ragt.

EP 2 535 618 A1 offenbart von Gehäusen umschlossene Stirnräder, die jedoch nicht aus den Gehäusen herausragen.

GB 681,298 offenbart ein von einem Gehäuse umgebenes gattungsgemäßes Stirnradgetriebe mit mehreren Stirnrädern, wobei ein Teilbereich eines ersten Stirnrades in einen Ölsumpf eintaucht. Zur Verbesserung der Schmierung und Wärmeabfuhr über das Schmiermedium ist im Gehäuse eine Kammer vorgesehen, dessen Boden den Eingriffsbereich des Stirnrades mit einem weiteren Stirnrad und Teilbereiche der Stirnräder in Umfangsrichtung mit geringem Abstand umschließt. Im Boden sind Übertrittsbohrungen für Schmiermedium von der Kammer zum Außenumfang des ersten Stirnrades vorgesehen.
WO 2012/028231 A1 offenbart ein Zahnradgetriebe mit einer Hüllwand, die wenigstens eines von zwei miteinander zusammenarbeitenden Zahnrädern umschließt und den umschlossenen Innenraum partiell oder vollkommen gegen die Umgebung absperrt. Die Zahnräder ragen nicht aus der Hüllwand heraus.
JP 2011-163365 A offenbart ein Zahnradgetriebe mit einem Ölkanal, der sich teilweise der Form der Zahnräder anschmiegt.

Der vorliegenden Erfindung liegt die Aufgabe zugrunde, ein Stirnradgetriebe der eingangs genannte Art derart weiter zu entwickeln, dass ein hoher Wirkungsgrad bei geringen Herstellungs- und Wartungskosten erreicht wird, das heißt, dass die Maßnahmen zur Verlustleistungsreduzierung zum einen wirksam und zum anderen kostengünstig sein sollen.

Die erfindungsgemäße Aufgabe wird durch ein Stirnradgetriebe gemäß dem unabhängigen Anspruch 1 gelöst. In den abhängigen Ansprüchen sind vorteilhafte und besonders zweckmäßige Ausgestaltungen der Erfindung angegeben.
Ein erfindungsgemäßes Stirnradgetriebe weist wenigstens zwei verzahnte Stirnräder auf, deren Verzahnungen in einem kämmenden Eingriff miteinander stehen, wobei die beiden Stirnräder jeweils über einer Drehachse drehbar sind. Das Stirnradgetriebe weist eine Hüllwand auf, welche die beiden Stirnräder in Umfangsrichtung und in Richtung der Drehachsen umschließt, wobei die Hüllwand eine Innenkontur aufweist, welche den Außendurchmessern der Stirnräder derart angepasst ist, dass sich zwischen der Hüllwand und den Stirnrädern zwei ineinander übergehende Ringspalte ergeben, wobei je ein Ringspalt zumindest im Wesentlichen konzentrisch zu je einer Drehachse angeordnet ist. Erfindungsgemäß umschließt die Hüllwand die beiden Stirnräder in Umfangsrichtung nur über einen Teil von deren Umfang, sodass ein Teil des äußeren Umfangs der beiden Stirnräder oder zumindest eines der beiden Stirnräder nach außen aus der Hüllwand herausragt. Dieser nach außen aus der Hüllwand herausragende Teil des Umfangs liegt somit frei gegenüber der Umgebung der Hüllwand, beispielsweise gegenüber einem Innenraum eines Getriebegehäuses des Stirnradgetriebes. Demnach ist keine vollständige Kapselung der Stirnräder wie beim genannten Stand der Technik vorgesehen. Der nach außen aus der Hüllwand herausragende Teil des Umfangs liegt, wenn die beiden Stirnräder nebeneinander positioniert sind, außerhalb einer Projektionsfläche, die durch einen Querschnitt senkrecht zur Drehachse der Stirnräder durch die entlang des äußeren Umfangs der Stirnräder positionierten Teile der Hüllwand gebildet wird. Mit anderen Worten weist die Hüllwand nicht nur eine Öffnung über dem Umfang der Stirnräder auf, durch welche die Stirnräder sozusagen in Sichtverbindung mit der Umgebung der Hüllwand stehen, sondern die Stirnräder ragen tatsächlich aus einer entsprechenden Öffnung der Hüllwand heraus und stehen über diese Öffnung über. Wenn die beiden Stirnräder übereinander positioniert sind, ragt entsprechend das untere Stirnrad nach unten über eine horizontale Ebene hinaus, in welcher die sich nach unten vom oberen zum unteren Stirnrad erstreckende Hüllwand endet.

Der aus der Hüllwand herausragende Teil der beiden Stirnräder oder des einen Stirnrads ist auf der Unterseite der Stirnräder positioniert, das heißt im Betrieb des Stirnradgetriebes in Richtung eines Ölsumpfes, der sich durch die Schwerkraft unten im Stirnradgetriebe ansammelt. Auf ihrer entgegengesetzten oberen Seite werden die Stirnräder hingegen vorteilhaft vollständig von der Hüllwand umschlossen, insbesondere über wenigstens der oberen Hälfte des Umfangs des jeweiligen Stirnrads, wobei die obere Hälfte unten insbesondere durch eine Horizontale abgeschlossen wird, das heißt die Hüllwand endet auf ihrer Unterseite in einer horizontalen Ebene. Wenn die Stirnräder übereinander positioniert sind, wobei insbesondere genau zwei Stirnräder vorgesehen sind, von denen das eine über dem anderen positioniert ist, kann beispielsweise das untere Stirnrad beginnend zumindest im Wesentlichen in Höhe seiner Drehachse oder auch darunter über einen Bogen von wenigstens annähernd wenigstens 90° umschlossen sein und das obere Stirnrad ist dann vorteilhaft durch die Hüllwand um mehr als 180°, insbesondere um im Wesentlichen 270° umschlossen, beginnend neben dem Eingriffsbereich der beiden Verzahnungen und im weiteren Verlauf nach oben über den Scheitel des oberen Stirnrades hinweg auf die gegenüberliegende Seite bis wieder hinunter zumindest im Wesentlichen in Höhe der Drehachse des oberen Stirnrades.

Der nach unten aus der Hüllwand herausragende Teil der Stirnräder, bei Übereinanderpositionierung der Stirnräder der nach unten herausragende Teil des unteren Stirnrades ist vorteilhaft frei oberhalb eines Ölsumpfes im Getriebe positioniert, insbesondere mit Abstand zu dem Ölsumpf beziehungsweise einer unteren Wand des Getriebegehäuses, wobei der Abstand vorteilhaft ein Vielfaches des Abstandes zwischen der Hüllwand und dem umschlossenen Bereich des oder der Stirnräder beträgt.

Die Erfindung ist jedoch auch mit der entsprechenden Maßnahme bei einem Getriebe anwendbar, in dem ein Ölsumpf außerhalb des Getriebegehäuses vorgesehen ist oder auf einen entsprechenden Ölsumpf durch eine andere geeignete Schmierung verzichtet werden kann.

Die beiden Stirnräder sind vorteilhaft in Horizontalrichtung des Stirnradgetriebes mit ihren Drehachsen nebeneinander positioniert, wobei die Drehachsen insbesondere innerhalb einer gemeinsamen horizontalen Ebene verlaufen. Die Ebene ist insbesondere parallel zur Oberfläche eines Ölsumpfes unten im Stirnradgetriebe.

Vorteilhaft umschließt die Hüllwand die beiden Stirnräder vollständig über deren oberen Hälfte und einen Teil der unteren Hälfte darüber hinaus, betrachtet in einem Querschnitt durch eine vertikale Ebene senkrecht zu den Drehachsen der Stirnräder. Die beiden über die obere Hälfte hinausgehenden Teile der Umhüllung können insbesondere an ihrem freien Ende in ihrem Querschnitt verjüngt ausgeführt sein.

Gemäß einer Ausführungsform der Erfindung ist der Spalt beziehungsweise Ringspalt zwischen der Umhüllung und dem Außendurchmesser der Stirnräder am freien Ende der Umhüllung verjüngt ausgeführt. Dies kann an einem freien Ende oder beiden freien Enden der Umhüllung vorgesehen sein. Eine solche Reduzierung des Ringspaltes gegenüber dem verbleibenden Bereich des Ringspaltes bewirkt eine Abdichtung, die einen unerwünschten Austritt und/oder Eintritt von Öl in den Ringspalt verhindert oder reduziert.
Gemäß einer Ausführungsform der Erfindung ist der Bereich des Zahneingriffs der Stirnräder, insbesondere auf der Oberseite der beiden Stirnräder, frei von einer Umhüllung oder es ist ein entsprechendes Fenster in der Umhüllung vorgesehen.

Der Erfindung liegt die Erkenntnis zugrunde, dass nicht nur durch Erzeugen eines Unterdrucks beziehungsweise Vakuums im Bereich der Verzahnungen der umlaufenden Stirnräder eine Verlustleistungsreduzierung bewirkt werden kann, sondern dass sich um die Stirnräder in der Praxis eine dünne Schicht aus schmierstoffarmen, insbesondere schmierölarmen Medium ausbildet, da der Schmierstoff, insbesondere das Öl, durch die Zentrifugalkraft nach außen geschleudert wird. Eine solche Schicht oder Schichtung wird durch die Hüllwand stabilisiert, wobei durch gezieltes Auswählen der Dicke der Ringspalte festgesetzt werden kann, dass außerhalb der Hüllwand ein vergleichsweise ölreicheres Medium vorhanden sein kann, wohingegen innerhalb der Hüllwand, das heißt in den Ringspalten zwischen den Stirnrädern und der Hüllwand, ein ölarmes Medium vorhanden ist. Somit wird, auch ohne vollständige Kapselung beziehungsweise ohne angelegtes Vakuum verhindert, dass schmierstoffreiches Medium an die Stirnräder gelangt, welches beschleunigt werden muss und somit die Leistungsaufnahme der Stirnräder erhöht.

Die Erfindung schließt nicht aus, dass zusätzlich ein Unterdruck im Innenraum des Getriebegehäuses, welches die Hüllwand umschließt, angelegt wird, das heißt, dass im Innenraum ein niedrigerer Druck als in der Umgebung des Getriebegehäuses herrscht. Ein solcher Unterdruck kann beispielsweise mittels einer externen oder integrierten Vakuumpumpe erzeugt werden, deren Saugseite am Innenraum angeschlossen ist. Bei einem solchen reduzierten Umgebungsdruck der Hüllwand kann die Leistungsaufnahme durch das teilgekapselte Innengehäuse, das heißt mit der erfindungsgemäßen Hüllwand, noch weiter reduziert werden. Auch gegenüber einer Ausführungsform mit besaugtem Innenraum des Getriebegehäuses ohne Kapselung der Stirnräder, das heißt ohne Vorsehen einer Hüllwand, ist die Verlustleistung der erfindungsgemäßen Ausführungsform mit einer teilweisen oder vollständigen Kapselung der Stirnräder, wobei auf letztere nachfolgend noch eingegangen wird, und zusätzlich druckreduziertem Innenraum des Getriebegehäuses verlustleistungsärmer, da nämlich herkömmlich durch die geringere Dichte des Mediums im Getriebegehäuse nur im geringeren Maße eine Schichtung, wie sie oben beschrieben wurde, erfolgt und dadurch das ölreiche Medium die Verzahnungen der Stirnräder leichter erreichen kann. Durch die erfindungsgemäß vorgesehene Hüllwand wird die Schichtung der Medien künstlich eingestellt und verstärkt, auch bei einem Druck im Innenraum des Getriebegehäuses, der unterhalb des Umgebungsdruckes liegt.

Gemäß einer Ausführungsform der Erfindung ist der Innenraum eines Getriebegehäuses, in welchem die Stirnräder zusammen mit der Hüllwand angeordnet sind, mit einem Druck versehen, der gegenüber dem Umgebungsdruck, das heißt dem Druck in der äußeren Umgebung des Stirnradgetriebes außerhalb des Getriebegehäuses, reduziert ist. Insbesondere ist zwischen dem Getriebegehäuse und einem Teil oder dem gesamten Umfang der Hüllwand ein Abstand vorgesehen, der durch den Innenraum gebildet wird. Im Innenraum ist zumindest im Betrieb des Stirnradgetriebes ein Luft-Schmierstoff-Gemisch, insbesondere ein Luft-Öl-Gemisch vorhanden, dessen Druck durch beispielsweise eine externe oder integrierte Vakuumpumpe reduziert wird.
Gemäß einer vorteilhaften Ausgestaltung der Erfindung mit teilgekapselten Stirnrädern erstreckt sich der aus der Hüllwand herausragende Teil des äußeren Umfangs der beiden Stirnräder über einen Bogen von jeweils 10° bis 180°, insbesondere von 90° bis 180°, die Grenzwerte eingeschlossen oder ausgeschlossen. Erfindungsgemäß ist der aus der Hüllwand herausragende Teil der Stirnräder auf der Unterseite der Stirnräder positioniert, bezogen auf den bestimmungsgemäßen Gebrauch des Stirnradgetriebes.
Die Ringspalte können beispielsweise eine Dicke von 1 bis 10 mm aufweisen, zumindest in dem Teil, in dem die Innenkontur der Hüllwand und der äußere Durchmesser der Stirnräder äquidistant beziehungsweise konzentrisch zueinander sind.
Besonders vorteilhaft ist an der Hüllwand auf jeder Stirnseite der Stirnräder ein die Stirnseite abdeckender Seitendeckel angeschlossen, wobei der Seitendeckel insbesondere auch den aus der Hüllwand herausragenden Teil des äußeren Umfangs des jeweiligen Stirnrads auf dessen Stirnseite abdeckt. Wenn der herausragende Teil auf der Unterseite der Stirnräder positioniert ist, bedeutet dies, dass sich der oder die Seitendeckel weiter nach unten als die Hüllwand erstreckt/erstrecken.

Gemäß einer Ausführungsform der Erfindung weist jedes Stirnrad wenigstens eine Antriebswelle oder Abtriebswelle auf, die durch wenigstens einen Seitendeckel hindurchgeführt ist.

Gemäß einer Ausführungsform der Erfindung ist in wenigstens einem Seitendeckel oder in beiden Seitendeckeln im Bereich des gegenseitigen Eingriffs der Verzahnungen der beiden Stirnräder eine Öffnung vorgesehen. Diese kann beispielsweise dazu dienen, Kühlöl aus dem von der Hüllwand umschlossenen Bereich der Stirnräder beziehungsweise aus den Ringspalten abzuführen.

Das Kühlöl, allgemein das Kühlmedium für die Stirnräder kann beispielsweise in den Zahneintritt oder bevorzugt Zahnaustritt der miteinander kämmenden Verzahnungen gespritzt werden. Hierfür können dort entsprechende Düsen vorgesehen sein.

Wenn die Hüllwand nach unten geöffnet ist, kann das Kühlöl auch hier leicht aus der Hüllwand abgeführt werden.

Gemäß einer Ausführungsform der Erfindung ist die Hüllwand an wenigstens einem Umfangsende oder an beiden Umfangsenden in Umfangsrichtung der Stirnräder keilförmig verjüngt ausgeführt. Das Ausbilden eines Keils an den Umfangsenden bewirkt, dass die Strömung des Luft-Schmierstoff-Gemisches in Radialrichtung von den Verzahnungen der Stirnräder weggeleitet wird. Somit wird verhindert, dass schmierstoffreiches Medium in den Ringspalt gesogen wird. Die Keile dienen sozusagen als Dichtung, um den Ringspalt gegenüber der Umgebung beziehungsweise gegenüber dem Innenraum des Getriebegehäuses abzudichten. Hierbei gilt zu beachten, dass sich die Stirnräder in der Regel im Bereich ihres von der Hüllwand abgedeckten Umfangs aufeinander zu und im Bereich des von der Hüllwand nicht abgedeckten Umfangs voneinander wegdrehen. Erfindungsgemäß weist die Hüllwand eine Kühlung auf. Beispielsweise sind Kühlbohrungen zum Durchleiten eines Kühlmediums und/oder oberflächenvergrößernde Rippen auf der Außenseite der Hüllwand vorgesehen und/oder es ist eine Kühlmediumberieselungsvorrichtung vorgesehen, um die Hüllwand von außen zu berieseln. Erfindungsgemäß wird der enge Abstand zwischen der Hüllwand und den Stirnrädern für eine Wärmeabfuhr über die Hüllwand genutzt und die Funktion der Kühlung der Stirnräder von der Funktion der Schmierung der Stirnräder getrennt. So ist erfindungsgemäß eine aktive Kühlung der Hüllwand mit einem Kühlmedium und die Schmierung der Verzahnungen der Stirnräder mit einem Schmiermedium vorgesehen, wobei der Kühlmediumvolumenstrom größer als der Schmiermediumvolumenstrom ist, was nicht ausschließt, dass als Kühlmedium und Schmiermedium dasselbe Medium verwendet wird, insbesondere Öl aus einem Ölsumpf des Stirnradgetriebes. Beispielsweise wird ein erster Volumenstrom des Ölsumpfes durch die Hüllwand und/oder über die Hüllwand als Schmiermediumstrom geleitet, und ein zweiter Volumenstrom des Öls wird durch die Verzahnungen geleitet, insbesondere in den Zahneintritt und/oder Zahnaustritt der miteinander kämmenden Verzahnungen gespritzt, um die Schmierung sicherzustellen, wobei der zweite Volumenstrom kleiner als der erste Volumenstrom ist. Beispielsweise beträgt der erste Volumenstrom - Kühlmediumvolumenstrom - wenigstens das Doppelte oder Dreifache, inbesondere das Fünf- bis Zehnfache des zweiten Volumenstroms, das heißt des Schmiermediumvolumenstroms.

In einer Weiterbildung der Erfindung kann vorgesehen sein, als Kühlmedium ein anderes Medium als das Schmiermedium zu verwenden, beispielsweise als Kühlmedium Wasser oder ein Wassergemisch und als Schmiermedium Öl.

Die Dicke der Ringspalte ist vorteilhaft derart gewählt, dass eine radiale Geschwindigkeitskomponente des im Ringspalt strömenden Mediums reduziert wird. Medium, das bereits in Umfangsrichtung beschleunigt wurde, soll durch die Form der Innenkontur der Hüllwand eine möglichst konstante Geschwindigkeit aufweisen. Zugleich sollte die Dicke der Ringspalte nicht zu gering gewählt werden, da mit abnehmender Dicke die Relativgeschwindigkeiten im Medium zunehmen und damit der Verlust ansteigt.

Die Erfindung soll nachfolgend anhand eines Ausführungsbeispiels und den Figuren exemplarisch beschrieben werden.

Es zeigen:
- Figur 1: einen schematischen Axialschnitt durch ein erfindungsgemäß ausgeführtes Stirnradgetriebe mit Teilkapselung;
- Figur 2: eine schräge Draufsicht auf die teilgekapselten Stirnräder aus der Figur 1;
- Figur 3: eine schematische Darstellung einer möglichen Teilkapselung der Stirnräder mit einem diese umschließenden Getriebegehäuses;
- Figur 4: eine alternative Ausführungsform zu der Figur 3, bei welcher die Stirnräder übereinander positioniert sind;
- Figur 5: eine schematische Darstellung mit der Trennung der Kühlung und Schmierung der Stirnräder beziehungsweise von deren Verzahnungen.

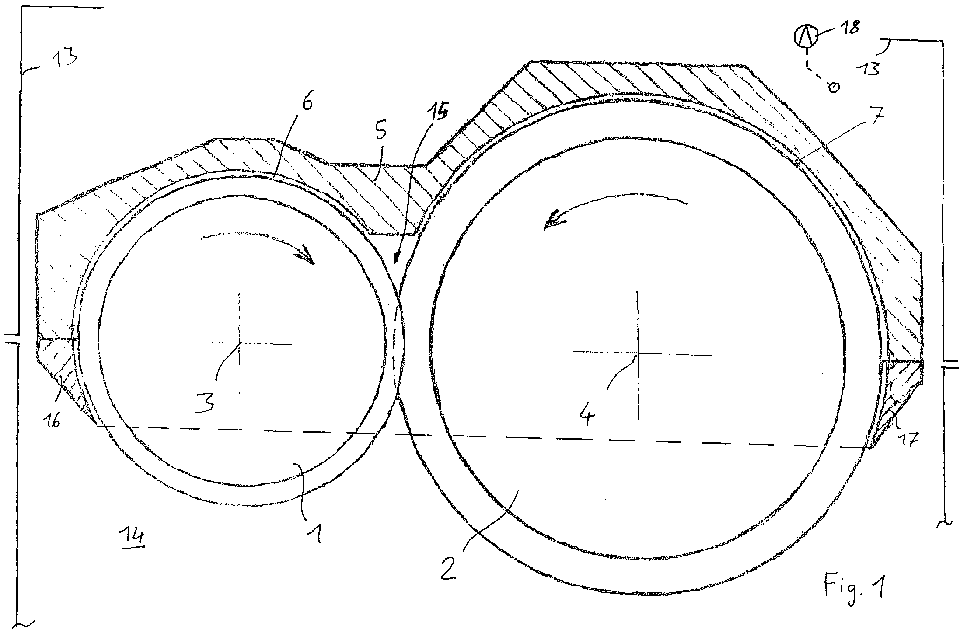

In der Figur 1 ist ein Stirnradgetriebe mit einem ersten Stirnrad 1 und einem zweiten Stirnrad 2 dargestellt, die beispielsweise als schrägverzahnte oder doppelschrägverzahnte Stirnräder ausgeführt sind. Wie man sieht, stehen die Verzahnungen der beiden Stirnräder 1, 2 in einem kämmenden Eingriff miteinander, sodass das erste Stirnrad 1, wenn es über seiner Drehachse 3 umläuft, das zweite Stirnrad 2 über dessen Drehachse 4 antreibt oder umgekehrt. Die Drehrichtung der Stirnräder 1, 2 ist durch die Pfeile angezeigt.

Es ist eine die Stirnräder 1, 2 eng umschließende Hüllwand 5 vorgesehen, wobei sich die Hüllwand 5 jedoch nur über einen Teil des Umfangs der beiden Stirnräder 1, 2 erstreckt, sodass ein Teil des äußeren Umfangs der Stirnräder 1, 2 gegenüber einem Innenraum 14 des hier nur schematisch dargestellten Getriebegehäuses 13 freiliegt. Im gezeigten Ausführungsbeispiel ragt der Teil des äußeren Umfangs der beiden Stirnräder 1, 2 auf der Unterseite der Stirnräder 1, 2 aus der Hüllwand 5 heraus.

Im übrigen Bereich der Umfänge der beiden Stirnräder 1, 2 bildet die Innenkontur der Hüllwand 5 mit den Außendurchmessern der Stirnräder 1, 2 zwei ineinander übergehende Ringspalte 6, 7 aus, die bis auf den Bereich des Eingriffsbereichs 15 der Verzahnungen eine konstante Dicke über dem Umfang der Stirnräder 1, 2 aufweisen.

Im gezeigten Ausführungsbeispiel erstreckt sich der aus der Hüllwand 5 herausragende Teil des äußeren Umfangs der beiden Stirnräder 1, 2 über jeweils einen Bogen von annähernd 180°, wobei die Differenz zu 180° durch zwei Keile 16, 17 an den beiden Umfangsenden der Hüllwand 5 abgedeckt wird, das heißt, dass die Hüllwand 5 an ihren beiden Umfangsenden keilförmig verjüngt ausgeführt ist. Wie man sich aufgrund der eingezeichneten Drehrichtungen der Stirnräder 1, 2 vorstellen kann, bewirkt diese keilförmige Verjüngung ein Umleiten der Strömung in Radialrichtung weg von den Stirnrädern 1, 2 im Bereich des Eintauchens der Stirnräder 1, 2 in die Hüllwand 5. Mit der gestrichelten Linie und der im Querschnitt gezeigten Hüllwand 5 ist die Projektionsfläche begrenzt, aus welcher die beiden Stirnräder 1, 2 herausragen. Wie man sieht, weist somit die Hüllwand 5 nicht nur einfach unten eine Öffnung auf, durch welche hindurch die Stirnräder 1, 2 von außen ersichtlich sind, sondern die Stirnräder 1, 2 ragen mit ihrem äußeren Umfang aus der Hüllwand 5 heraus.

Innerhalb des Innenraums 14 kann im Getriebegehäuse 13 unten ein Schmierstoffsumpf beziehungsweise Ölsumpf vorgesehen sein, der hier nicht näher dargestellt ist, da er einen entsprechenden Abstand von der Unterseite der Stirnräder 1, 2 aufweist. Ferner kann eine Absaugvorrichtung, das heißt eine Vakuumpumpe, vorgesehen sein, die mit ihrer Saugseite an dem Innenraum 14 angeschlossen ist, um diese zu besaugen. Eine solche Vakuumpumpe ist nur schematisch dargestellt und mit dem Bezugszeichen 18 bezeichnet. Die Erfindung kann jedoch auch ohne eine solche Vakuumpumpe ausgeführt werden.

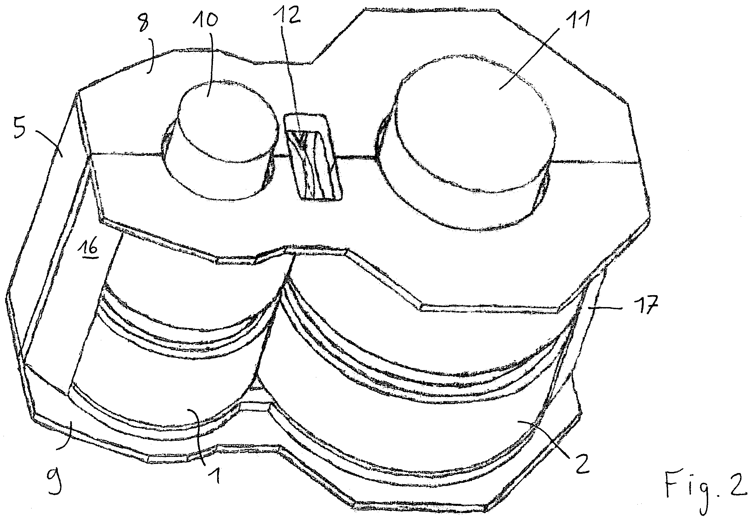

In der Figur 2 sind die beiden seitlich an der Hüllwand 5 angeschlossenen Seitendeckel 8, 9 dargestellt. Wie man sieht, decken diese auch den aus der Hüllwand 5 nach unten herausragenden Teil des äußeren Umfangs der Stirnräder 1, 2 ab.
Das erste Stirnrad 1 weist eine Antriebswelle 10 und das zweite Stirnrad 2 weist eine Abtriebswelle 11 auf. Beide Wellen 10, 11 sind durch die Seitendeckel 8 hindurchgeführt. Bei einem zweiten Stirnrad 2, das das erste Stirnrad 1 antreibt, wären die Wellen 10, 11 entsprechend vertauscht.

Ferner ist in dem Seitendeckel 8 und insbesondere auch in dem Seitendeckel 9 im Bereich des gegenseitigen Eingriffs der Verzahnungen der beiden Stirnräder 1, 2 eine Öffnung 12 vorgesehen. Diese dient dem Abführen von Kühlmedium.

Aus der Figur 2 erkennt man ferner, dass im gezeigten Ausführungsbeispiel jedes Stirnrad 1, 2 zwei Verzahnungen aufweist, die in Axialrichtung nebeneinander und insbesondere mit Abstand zueinander positioniert sind, um eine Doppelverzahnung, insbesondere eine Doppelschrägverzahnung auszubilden.

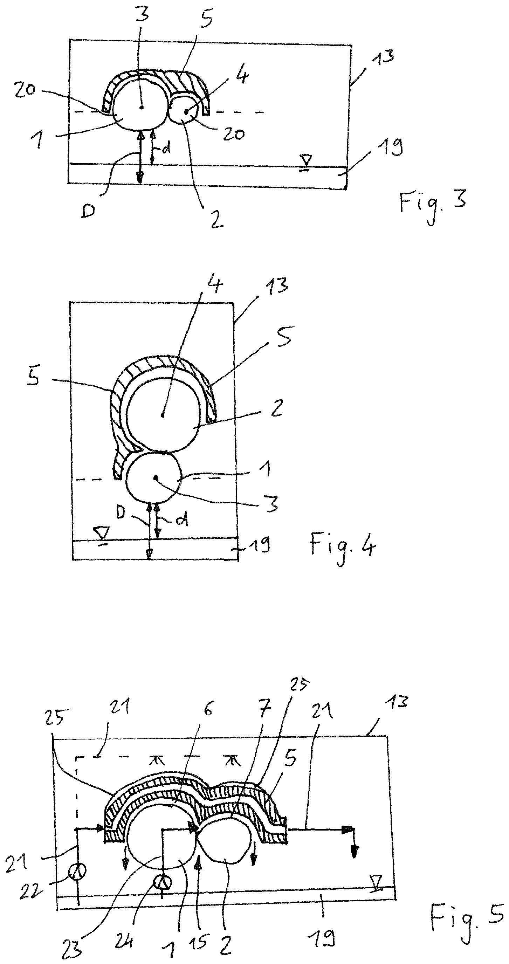

In der Figur 3 ist nochmals schematisch eine Ausführungsform eines erfindungsgemäßen Stirnradgetriebes gemäß einer bevorzugten Ausgestaltung gezeigt. Hier umschließt die Hüllwand 5 jeweils die obere Hälfte der beiden Stirnräder 1, 2 und endet somit in einer durch die Drehachsen 4, 5 verlaufenden horizontalen Ebene, siehe die gestrichelte Linie.

Unten im Getriebegehäuse 13, welches die beiden Stirnräder 1, 2 und die Hüllwand 5 umschließt, ist der Ölsumpf 19 schematisch dargestellt. Man erkennt, dass die aus der Hüllwand 5 herausragenden Teile 20 der Stirnräder 1, 2, das heißt die Teile 20, die unterhalb der durch die gestrichelte Linie gezeigten Ebene, in welcher die Hüllwand 5 endet, positioniert sind, einen Abstand D zum Getriebegehäuse 13 und auch einen Abstand d zum Ölsumpf 19 aufweisen, wobei die beiden Stirnräder 1, 2 in diesem Bereich frei gegenüber dem Ölsumpf 19 positioniert sind, insbesondere ohne zwischengeschaltete, die Stirnräder 1, 2 abdeckende Bauteile. Somit kann Schmieröl leicht aus den Verzahnungen der Stirnräder 1, 2 in den Ölsumpf 19 abgeführt werden, insbesondere durch freies Abspritzen.

In der Figur 4 ist eine alternative Ausführungsform in einer ähnlichen Darstellung wie jene der Figur 3 gezeigt. Abweichend sind hier die Stirnräder 1, 2 übereinander positioniert. Bezüglich der dargestellten Bauteile wird auf die Figur 3 und die entsprechenden Bezugszeichen verwiesen.

In der Figur 4 ist das obere Stirnrad, hier das zweite Stirnrad 2, zu drei viertel, das heißt annähernd über 270° von der Hüllwand 5 umschlossen, das untere Stirnrad, hier das erste Stirnrad 1, ist über einem Viertel seines Umfangs, das heißt über annähernd 90° von der Hüllwand 5 umschlossen. Demnach ragt die untere Hälfte des ersten Stirnrades 1 aus der Hüllwand 5 nach unten heraus, siehe auch hier wieder die gestrichelte Linie, welche die Ebene zeigt, in welcher die Hüllwand 5 von oben endet. Auch die Abstände d, D des unteren Stirnrades 1 zum Ölsumpf 19 beziehungsweise dem Getriebegehäuse 13 betragen, wie bei der Ausführungsform gemäß der Figur 3, wiederum ein Vielfaches des Abstandes zwischen den Stirnrädern 1, 2 und der Hüllwand 5 im Bereich der Umschließung beziehungsweise Kapselung.
In der Figur 5 ist ein Aspekt der vorliegenden Erfindung dargestellt, nämlich die Trennung der Kühlung der Stirnräder 1, 2 von der Schmierung der Stirnräder 1, 2. So wird ein erster Ölvolumenstrom zur Kühlung der Stirnräder 1, 2 durch die Hüllwand 5 geleitet. Dieser erste Ölvolumenstrom ist mit 21 bezeichnet. Schematisch ist zur Förderung dieses ersten Ölvolumenstroms 21 eine erste Ölpumpe 22 angedeutet, welche das Öl aus dem Ölsumpf 19 fördert. Dies ist jedoch nicht zwingend notwendig, so könnte auch ein anderes Kühlmedium oder eine andere Förderung vorgesehen sein. Zusätzlich oder alternativ kann, wie durch die gestrichelte Linie angedeutet ist, die Hüllwand 5 auch durch Berieselung mit dem ersten Ölvolumenstrom 21 gekühlt werden.
Zur Schmierung der Stirnräder 1, 2 wird ein zweiter Ölvolumenstrom 23 in die Verzahnungen der Stirnräder 1, 2 geleitet, vorteilhaft in den Eingriffsbereich 15 der Verzahnungen, beispielsweise durch eine oder mehrere Öffnungen 12, wie sie in der Figur 2 dargestellt ist. Dieser zweite Ölvolumenstrom 23 wird beispielsweise mittels einer zweiten Ölpumpe 24 aus dem Ölsumpf 19 gefördert. Auch hier kommt jedoch auch eine andere Förderung oder eine andere Quelle in Betracht.

Der erste Ölvolumenstrom 21 und der zweite Ölvolumenstrom 23 können auch mittels einer gemeinsamen Ölpumpe gefördert werden, wobei jedoch in allen Fällen vorteilhaft der erste Ölvolumenstrom 21 größer als der zweite Ölvolumenstrom 23 ist, insbesondere ein Vielfaches hiervon beträgt.

Der zweite Ölvolumenstrom 23 kann vorteilhaft frei von den Stirnrädern 1, 2 abspritzen, während der erste Ölvolumenstrom 21 in der Regel aus wenigstens einer entsprechenden Öffnung aus der Hüllwand 5 austritt oder, bei einer Berieselung der Hüllwand 5, von der Hüllwand 5 abläuft beziehungsweise abtropft.

Durch die aktive Kühlung der Hüllwand 5 können die Stirnräder 1, 2 im Unterschied zu einer direkten Kühlung mittelbar durch Wärmeübertragung über die Ringspalte 6, 7 in die Hüllwand 5 gekühlt werden. Dies ermöglicht, dass ein vergleichsweise kleiner Schmierölvolumenstrom, hier zweiter Ölvolumenstrom 23, durch die Ringspalte 6, 7 und/oder den Eingriffsbereich 15 der Verzahnung gefördert wird, was die Verluste reduziert.

Im gezeigten Ausführungsbeispiel ist ferner schematisch eine Kühlung der Hüllwand 5 durch Kühlrippen 25 außen auf der Hüllwand 5 gezeigt.

Gemäß einer Ausführungsform der Erfindung könnte es ausreichend sein, die Hüllwand 5 nur mittels der wenigstens einen Kühlrippe 25 zu kühlen und trotzdem über die Hüllwand 5 einen größeren Wärmestrom abzuführen als über den durch die beziehungsweise entlang der Verzahnung, insbesondere durch die Ringspalte 6, 7 geleiteten Kühlmediumstrom, hier den zweiten Ölvolumenstrom 23.

## Patentansprüche

1. Stirnradgetriebe mit wenigstens zwei verzahnten Stirnrädern (1, 2), deren Verzahnungen in einem kämmenden Eingriff miteinander stehen und die jeweils über einer Drehachse (3, 4) drehbar sind;
1.1 mit einer Hüllwand (5), welche die beide Stirnräder (1, 2) in Umfangsrichtung und in Richtung der Drehachsen (3, 4) umschließt; wobei
1.2 die Hüllwand (5) eine Innenkontur aufweist, welche den Außendurchmessern der Stirnräder (1, 2) derart angepasst ist, dass sich zwischen der Hüllwand (5) und den Stirnrädern (1, 2) zwei ineinander übergehende Ringspalte (6, 7) ergeben, wobei je ein Ringspalt (6, 7) zumindest im Wesentlichen konzentrisch zu je einer Drehachse (3, 4) angeordnet ist; wobei
1.3 die Hüllwand (5) die beiden Stirnräder (1, 2) in Umfangsrichtung nur über einen Teil von deren Umfang umschließt, sodass ein Teil des äußeren Umfangs der beiden Stirnräder (1, 2) oder zumindest eines der beiden Stirnräder (1, 2) nach außen aus der Hüllwand (5) herausragt; wobei der aus der Hüllwand (5) herausragende Teil beider Stirnräder (1, 2) oder des einen Stirnrads (1, 2) auf der Unterseite der Stirnräder (1, 2) positioniert ist; wobei die Hüllwand (5) eine Kühlung aufweist, insbesondere Kühlbohrungen zum Durchleiten eines Kühlmediums, oberflächenvergrößernde Rippen auf der Außenseite und/oder eine Kühlmediumberieselungsvorrichtung; **dadurch gekennzeichnet, dass** mittels der Kühlung der Hüllwand (5) ein größerer Wärmestrom aus den Stirnrädern (1, 2) und/oder deren Verzahnung abgeführt wird, als mit einem Schmiermediumstrom, insbesondere Schmierölstrom, mit welchem der kämmende Eingriff der Verzahnungen geschmiert wird und der durch die Ringspalte (6, 7) geleitet wird.

2. Stirnradgetriebe gemäß Anspruch 1, **dadurch gekennzeichnet, dass** sich der aus der Hüllwand (5) herausragende Teil des äußeren Umfangs der beiden Stirnräder (1, 2) über einen Bogen von jeweils 10° bis 180°, insbesondere von 90° bis 180° erstreckt.

3. Stirnradgetriebe gemäß einem der Ansprüche 1 oder 2, **dadurch gekennzeichnet, dass** das Stirnradgetriebe ein Getriebegehäuse (13) aufweist, das einen mit einem Luft-Schmierstoff-Gemisch befüllten Innenraum (14) aufweist, und die Stirnräder (1, 2) mit der Hüllwand (5) in dem Innenraum (14) positioniert sind, insbesondere mit Abstand zu der Hüllwand (5) über einem Teil oder dem gesamten Umfang der Hüllwand (5).

4. Stirnradgetriebe gemäß einem der Ansprüche 1 bis 3, **dadurch gekennzeichnet, dass** die Ringspalte (6, 7) eine Dicke von 1 bis 10 mm aufweisen.

5. Stirnradgetriebe gemäß einem der Ansprüche 1 bis 4, **dadurch gekennzeichnet, dass** an der Hüllwand (5) auf jeder Stirnseite der Stirnräder (1, 2) ein die Stirnseite abdeckender Seitendeckel (8, 9) angeschlossen ist, der insbesondere auch den aus der Hüllwand (5) herausragenden Teil des äußeren Umfangs des jeweiligen Stirnrads (1,2) auf dessen Stirnseite abdeckt.

6. Stirnradgetriebe gemäß Anspruch 5, **dadurch gekennzeichnet, dass** jedes Stirnrad (1, 2) wenigstens eine Antriebswelle (10) oder Abtriebswelle (11) aufweist, die durch wenigstens einen Seitendeckel (8, 9) hindurchgeführt ist.

7. Stirnradgetriebe gemäß einem der Ansprüche 5 oder 6, **dadurch gekennzeichnet, dass** wenigstens in einem Seitendeckel (8, 9) oder in beiden Seitendeckeln (8, 9) im Bereich des gegenseitigen Eingriffs der Verzahnungen der beiden Stirnräder (1, 2) eine Öffnung (12) vorgesehen ist.

8. Stirnradgetriebe gemäß einem der Ansprüche 1 bis 7, **dadurch gekennzeichnet, dass** die Hüllwand (5) an wenigstens einem Umfangsende oder an beiden Umfangsenden in Umfangsrichtung der Stirnräder (1, 2) keilförmig verjüngt ausgeführt ist und/oder mit einem geringeren Abstand gegenüber der Verzahnung des jeweiligen Stirnrades (1, 2) angeordnet ist als im übrigen Bereich des von der Hüllwand (5) überdeckten Umfangs.

9. Stirnradgetriebe gemäß Anspruch 3 oder einem der Ansprüche 4 bis 8, wenn abhängig von Anspruch 3, **dadurch gekennzeichnet, dass** der Innenraum (14) einen gegenüber der äußeren Umgebung des Stirnradgetriebes reduzierten Druck aufweist.

10. Stirnradgetriebe gemäß Anspruch 9, **dadurch gekennzeichnet, dass** eine Vakuumpumpe (18) vorgesehen ist, die mit ihrer Saugseite am Innenraum (14) diesen besaugend angeschlossen ist.

11. Stirnradgetriebe gemäß einem der Ansprüche 1 bis 10, **dadurch gekennzeichnet, dass** die beiden Stirnräder (1, 2) mit ihren Drehachsen (3, 4) nebeneinander positioniert sind, insbesondere mit den beiden Drehachsen (3, 4) in einer gemeinsamen horizontalen Ebene.

12. Stirnradgetriebe gemäß einem der Ansprüche 1 bis 11, **dadurch gekennzeichnet, dass** durch die Hüllwand (5) und/oder über die Hüllwand (5) ein erster Ölvolumenstrom (21) zur Kühlung der Hüllwand (5) geleitet wird, und durch die Verzahnungen der Stirnräder (1, 2), insbesondere durch die Ringspalte (6, 7) ein zweiter Ölvolumenstrom (23) geleitet wird, wobei der erste Ölvolumenstrom (21) größer als der zweite Ölvolumenstrom (23) ist, insbesondere ein Vielfaches desselben beträgt.

13. Stirnradgetriebe gemäß Anspruch 12, **dadurch gekennzeichnet, dass** der erste Ölvolumenstrom (21) und der zweite Ölvolumenstrom (23) aus einem Ölsumpf (19) des Stirnradgetriebes gefördert und in diesen zurückgeleitet werden, wobei der Ölsumpf (19) innerhalb oder außerhalb eines Getriebegehäuses (13) positioniert ist, das die Stirnräder (1, 2) mit der Hüllwand (5) umschließt.

## Claims

1. Spur gear transmission with at least two toothed spur gears (1, 2), the toothings of which are in meshing engagement with each other and which are each rotatable via an axis of rotation (3, 4);
1.1 with a covering wall (5) which surrounds the two spur gears (1, 2) in the circumferential direction and in the direction of the axes of rotation (3, 4); wherein
1.2 the covering wall (5) has an inner contour which is adapted to the outer diameters of the spur gears (1, 2) in such a manner that two annular gaps (6, 7) which merge into each other are produced between the covering wall (5) and the spur gears (1, 2), wherein one annular gap (6, 7) is arranged at least substantially concentrically with respect to each axis of rotation (3, 4); wherein
1.3 the covering wall (5) surrounds the two spur gears (1, 2) in the circumferential direction only over a part of the circumference thereof such that a part of the outer circumference of the two spur gears (1, 2) or of at least one of the two spur gears (1, 2) protrudes outward out of the covering wall (5);
wherein part of the two spur gears (1, 2) or of the one spur gear (1, 2) which protrudes out of the covering wall (5) is positioned on the lower side of the spur gears (1, 2);
wherein the covering wall (5) has cooling, in particular cooling bores for the passage of a cooling medium, surface-increasing ribs on the outer side and/or a cooling medium sprinkling device;
**characterized in that**, by means of the cooling of the covering wall (5), a greater heat flow is removed from the spur gears (1, 2) and/or the toothing thereof than with a lubricating medium flow, in particular lubricating oil flow, with which the meshing engagement of the toothing is lubricated and which is conducted through the annular gaps (6, 7).

2. Spur gear transmission according to Claim 1, **characterized in that** that part of the outer circumference of the two spur gears (1, 2) which protrudes out of the covering wall (5) extends over an arc of in each case 10° to 180°, in particular of 90° to 180°.

3. Spur gear transmission according to either of Claims 1 and 2, **characterized in that** the spur gear transmission has a transmission housing (13) which has an interior space (14) which is filled with an air-lubricant mixture, and the spur gears (1, 2) are positioned together with the covering wall (5) in the interior space (14), in particular at a distance from the covering wall (5) over a part of or the entire circumference of the covering wall (5).

4. Spur gear transmission according to one of Claims 1 to 3, **characterized in that** the annular gaps (6, 7) have a thickness of 1 to 10 mm.

5. Spur gear transmission according to one of Claims 1 to 4, **characterized in that** a side cover (8, 9) is connected to the covering wall (5) on each end side of the spur gears (1, 2), said side cover covering the end side and in particular also covering that part of the outer circumference of the respective spur gear (1, 2) which protrudes out of the covering wall (5), on the end side of said spur gear.

6. Spur gear transmission according to Claim 5, **characterized in that** each spur gear (1, 2) has at least one drive shaft (10) or output shaft (11) which is guided through at least one side cover (8, 9).

7. Spur gear transmission according to either of Claims 5 and 6, **characterized in that** an opening (12) is provided at least in one side cover (8, 9) or in both side covers (8, 9) in the region of the mutual engagement of the toothings of the two spur gears (1, 2).

8. Spur gear transmission according to one of Claims 1 to 7, **characterized in that** the covering wall (5) is designed to taper in a wedge-shaped manner at at least one circumferential end or at both circumferential ends in the circumferential direction of the spur gears (1, 2), and/or is arranged at a smaller distance in relation to the toothing of the respective spur gear (1, 2) than in the remaining region of the circumference covered by the covering wall (5).

9. Spur gear transmission according to Claim 3 or one of Claims 4 to 8, when dependent on Claim 3, **characterized in that** the interior space (14) has a reduced pressure in relation to the outer surroundings of the spur gear transmission.

10. Spur gear transmission according to Claim 9, **characterized in that** a vacuum pump (18) is provided which is connected by its suction side to the interior space (14) in a manner evacuating the latter by suction.

11. Spur gear transmission according to one of Claims 1 to 10, **characterized in that** the two spur gears (1, 2) are positioned next to each other with their axes of rotation (3, 4), in particular with the two axes of rotation (3, 4) in a common horizontal plane.

12. Spur gear transmission according to one of Claims 1 to 11, **characterized in that** a first oil volume flow (21) for cooling the covering wall (5) is conducted through the covering wall (5) and/or over the covering wall (5), and a second oil volume flow (23) is conducted through the toothings of the spur gears (1, 2), in particular through the annular gaps (6, 7), wherein the first oil volume flow (21) is greater than the second oil volume flow (23), in particular is a multiple thereof.

13. Spur gear transmission according to Claim 12, **characterized in that** the first oil volume flow (21) and the second oil volume flow (23) are conveyed out of an oil sump (19) of the spur gear transmission and are conducted back into said oil sump, wherein the oil sump (19) is positioned within or outside a transmission housing (13) which surrounds the spur gears (1, 2) with the covering wall (5).

## Revendications

1. Engrenage droit avec au moins deux roues dentées droites (1, 2), dont les dentures se trouvent en engagement d'engrènement l'une avec l'autre et qui peuvent tourner respectivement autour d'un axe de rotation (3, 4);
1.1 avec une paroi d'enveloppe (5), qui entoure les deux roues droites (1, 2) dans la direction périphérique et dans la direction des axes de rotation (3, 4);
1.2 dans lequel la paroi d'enveloppe (5) présente un contour intérieur, qui est adapté aux diamètres extérieurs des roues droites (1, 2), de telle manière qu'il en résulte entre la paroi d'enveloppe (5) et les roues droites (1, 2) deux fentes annulaires (6, 7) se prolongeant l'une dans l'autre, dans lequel chaque fente annulaire (6, 7) est disposée au moins essentiellement concentriquement à un axe de rotation respectif (3, 4) ;
1.3 dans lequel la paroi d'enveloppe (5) entoure les deux roues droites (1, 2) dans la direction périphérique uniquement sur une partie de leur périphérie, de telle manière qu'une partie de la périphérie extérieure des deux roues droites (1, 2) ou d'au moins une des deux roues droites (1, 2) s'étende vers l'extérieur hors de la paroi d'enveloppe (5);
dans lequel la partie des deux roues droites (1, 2) ou de ladite une des roues droites (1, 2) s'étendant hors de la paroi d'enveloppe (5) est positionnée sur le côté inférieur des roues droites (1, 2);
dans lequel la paroi d'enveloppe (5) présente un refroidissement, en particulier des trous de refroidissement pour le passage d'un milieu de refroidissement, des nervures d'extension de la surface sur le côté extérieur et/ou un dispositif de ruissellement de milieu de refroidissement;
**caractérisé en ce qu'**au moyen du refroidissement de la paroi d'enveloppe (5), on évacue hors des roues droites (1, 2) et/ou de leur denture un flux de chaleur plus important qu'avec un courant de lubrifiant, en particulier un courant d'huile de lubrification, avec lequel l'engagement d'engrènement des dentures est lubrifié et qui est conduit à travers les fentes annulaires (6, 7).

2. Engrenage droit selon la revendication 1, **caractérisé en ce que** la partie de la périphérie extérieure des deux roues droites (1, 2) s'étendant hors de la paroi d'enveloppe (5) s'étend sur un arc valant respectivement 10° à 180°, en particulier 90° à 180°.

3. Engrenage droit selon une des revendications 1 ou 2, **caractérisé en ce que** l'engrenage droit présente un carter d'engrenage (13), qui présente une chambre intérieure (14) remplie d'un mélange air-lubrifiant, et les roues droites (1, 2) avec la paroi d'enveloppe (5) sont positionnées dans la chambre intérieure (14), en particulier à distance de la paroi d'enveloppe (5) sur une partie ou la totalité de la périphérie de la paroi d'enveloppe (5).

4. Engrenage droit selon l'une quelconque des revendications 1 à 3, **caractérisé en ce que** les fentes annulaires (6, 7) présentent une épaisseur de 1 à 10 mm.

5. Engrenage droit selon l'une quelconque des revendications 1 à 4, **caractérisé en ce qu'**un couvercle latéral (8, 9) recouvrant le côté frontal est raccordé à la paroi d'enveloppe (5) sur chaque côté frontal des roues droites (1, 2), et recouvre en particulier aussi sur son côté frontal la partie de la périphérie extérieure de la roue droite respective (1, 2) s'étendant hors de la paroi d'enveloppe (5).

6. Engrenage droit selon la revendication 5, **caractérisé en ce que** chaque roue droite (1, 2) présente au moins un arbre d'entraînement (10) ou un arbre de sortie (11), qui sont menés à travers au moins un couvercle latéral (8, 9).

7. Engrenage droit selon une des revendications 5 ou 6, **caractérisé en ce qu'**il est prévu une ouverture (12) au moins dans un couvercle latéral (8, 9) ou dans les deux couvercles latéraux (8, 9) dans la région de l'engrènement mutuel des dentures des deux roues droites (1, 2).

8. Engrenage droit selon l'une quelconque des revendications 1 à 7, **caractérisé en ce que** la paroi d'enveloppe (5) s'amincit en forme de coin à au moins une extrémité périphérique ou aux deux extrémités périphériques dans la direction périphérique des roues droites (1, 2) et/ou est disposée à une plus faible distance par rapport à la denture de la roue droite respective (1, 2) que dans le reste de la région de la périphérie recouverte par la paroi d'enveloppe (5).

9. Engrenage droit selon la revendication 3 ou l'une quelconque des revendications 4 à 8 lorsqu'elle dépend de la revendication 3, **caractérisé en ce que** la chambre intérieure (14) présente une pression réduite par rapport à l'environnement extérieur de l'engrenage droit.

10. Engrenage droit selon la revendication 9, **caractérisé en ce qu'**il est prévu une pompe à vide (18), qui est raccordée par son côté d'aspiration à la chambre intérieure (14) pour aspirer celle-ci.

11. Engrenage droit selon l'une quelconque des revendications 1 à 10, **caractérisé en ce que** les deux roues droites (1, 2) sont positionnées avec leurs axes de rotation (3, 4) l'un à côté de l'autre, en particulier avec les deux axes de rotation (3, 4) dans un plan horizontal commun.

12. Engrenage droit selon l'une quelconque des revendications 1 à 11, **caractérisé en ce qu'**un premier courant volumétrique d'huile (21) est conduit à travers la paroi d'enveloppe (5) et/ou sur la paroi d'enveloppe (5) pour le refroidissement de la paroi d'enveloppe (5), et un deuxième courant volumétrique d'huile (23) est conduit à travers les dentures des roues droites (1, 2), en particulier à travers les fentes annulaires (6, 7), dans lequel le premier courant volumétrique d'huile (21) est plus important que le deuxième courant volumétrique d'huile (23), en particulier vaut un multiple de celui-ci.

13. Engrenage droit selon la revendication 12, **caractérisé en ce que** le premier courant volumétrique d'huile (21) et le deuxième courant volumétrique d'huile (23) sont transportés à partir d'une réserve d'huile (19) de l'engrenage droit et sont renvoyés dans celle-ci, dans lequel la réserve d'huile (19) est positionnée à l'intérieur ou à l'extérieur d'un carter d'engrenage (13), qui entoure les roues droites (1, 2) avec la paroi d'enveloppe (5).
